# EUROPÄISCHE PATENTANMELDUNG

(11) **EP 2 043 125 A2**
(43) Veröffentlichungstag der Anmeldung: **01.04.2009**
(21) Anmeldenummer: 08014121.1
(22) Anmeldetag: 07.08.2008
(51) Int. Cl.: H01H 19/18

(54) **Elektrisches/elektronisches Installationsgerät**

(30) Priorität: 25.09.2007 DE 102007045868
(71) Anmelder: Albrecht Jung GmbH & Co. KG, 58579 Schalksmühle (DE)
(72) Erfinder: Kandt, Richard, 44803 Bochum (DE); Kohlhaas, Johannes, 58579 Schlaksmühle (DE); Ullrich, Konrad, 58339 Breckerfeld (DE); Bonventre, Giancarlo, 58507 Lüdenscheid (DE); Wiesing, Dietmar, 58515 Lüdenscheid (DE); Teichmann, Nicole, 58849 Herscheid (DE); Gebhardt, Marc, 58579 Schalksmühle (DE)

(57) **Zusammenfassung**

Es wird ein elektrisches/elektronisches Installationsgerät vorgeschlagen, welches ein Gehäuse aufweist dessen Sockelteil zur Aufnahme zumindest einer Funktionseinheit und dessen Deckelteil zumindest zur Anordnung und Aufnahme mehrerer Betätigungstasten vorgesehen ist. Zu dem Zweck ein elektrisches/elektronisches Installationsgerät zu schaffen, dessen Lichtleiteranordnung bei Realisierung einer besonders guten Beleuchtungsqualität einen besonders einfachen Aufbau aufweist und welche sich zudem auf besonders einfache Art und Weise herstellen und montieren lässt, besteht die Lichtleiteranordnung aus zumindest einem ersten Lichtleitelement, welches mit seinem Lichteinkoppelbereich zumindest einem auf einer Leiterplatte angeordneten Leuchtmittel zugeordnet ist, und welches durch die Formgebung und Anordnung seiner Reflektionsbereiche und seines Lichtauskoppelbereiches das eingespeiste Licht durch Reflektion gezielt in zumindest ein zweites Lichtleitelement einspeist, welches zum Zwecke der Beleuchtung zumindest einen Lichtaustrittsbereich aufweist.

## Beschreibung

Die vorliegende Erfindung geht von einem gemäß Oberbegriff des Hauptanspruches konzipierten elektrischen/elektronischen Installationsgerät aus.

Derartige elektrische/elektronische Installationsgeräte sind in der Regel dafür vorgesehen, eine Vielzahl von in Gebäuden installierte Aktoren (Jalousieantriebe, Beleuchtungseinrichtungen, Fühler, Wächter usw.) bedarfsgerecht zu beeinflussen. Zu diesem Zweck sind die unterschiedlichsten Installationseinrichtungen, wie Schalter, Taster, Dimmer usw. bekannt geworden. Oftmals weisen solche elektrischen/elektronischen Installationsgeräte mehrere Betätigungstasten zur bedarfsgerechten Beeinflussung der angeschlossenen Aktoren auf und sind zur Montage an einer Wand vorgesehen. Um die Beleuchtung mehrerer Beleuchtungsbereiche zu realisieren sind dabei oftmals Lichtleiteranordnungen vorgesehen, die einerseits einem Leuchtmittel zugeordnet und andererseits mit einem Lichtauskoppelbereich versehen sind.

Sind derartige elektrische/elektronische Installationsgeräte z. B. als Türkommunikationsgeräte ausgeführt, so sind diese in der Regel dafür vorgesehen, bei Bedarf eine Kommunikationsmöglichkeit zwischen einem Wohnungsinhaber und einem Besucher zu schaffen. Oftmals weist ein solches elektrisches/elektronisches Installationsgerät mehrere Betätigungstasten (z. B. Klingeltasten) auf, damit sich der Besucher beim ausgewählten Wohnungsinhaber bemerkbar machen kann. Außerdem sind solche elektrischen/elektronischen Türkommunikationsgeräte oftmals mit einer Lautsprechereinheit und einem Mikrophon versehen, damit der Wohnungsinhaber mit dem Besucher sprechen kann und danach entscheidet, ob diesem Einlass gewährt wird. Zu diesem Zweck sind solche elektrischen/elektronischen Türkommunikationsgeräte mit einer Öffnungstaste versehen. Vielfach sind solche elektrischen/elektronischen Türkommunikationsgeräte auch mit einer Funktionstaste ausgerüstet, um z. B. die Lichtanlage im Flur einschalten zu können. Auch solche elektrischen/elektronischen Türkommunikationsgeräte sind zur Montage an einer Wand vorgesehen und oftmals zur Realisierung mehrerer Beleuchtungsbereiche mit einer, einem Leuchtmittel zugeordneten Lichtleiteranordnung ausgerüstet. Die durch derartige Lichtleiteranordnungen erzielte Beleuchtungsqualität ist jedoch oftmals nicht zufriedenstellend, wobei der Aufbau, sowie die Montage der notwendigen Lichtleiteranordnungen zudem in der Regel aufwendig und schwierig ist. Durch die EP 0 993 171 A2 ist z. B. ein entsprechendes Türkommunikationsgerät bekannt geworden.

Durch die DE 10 2004 043 649 B4 ist ein dem Oberbegriff des Hauptanspruches entsprechendes elektrisches/elektronisches Installationsgerät vorgesehen für die Gebäudesystemtechnik bekannt geworden. Dieses elektrische/elektronische Installationsgerät weist ein Gehäuse zur Aufnahme mehrerer Funktionseinheiten auf, wobei das Gehäuse ein zur Aufnahme zumindest einer Funktionseinheit vorgesehenes Sockelteil und zumindest ein zur Halterung von Betätigungstasten vorgesehenes Deckelteil aufweist. Üblicherweise sind diese elektrischen/elektronischen Installationsgeräte mit einer einem Leuchtmittel zugeordneten Lichtleiteranordnung versehen, damit die Beleuchtung mehrerer Beleuchtungsbereiche wie z. B. die Be- und/oder Ausleuchtung von Betätigungstasten, Beschriftungsfeldern usw. oder aber die Realisierung von Funktions- und Statusanzeigen möglich ist. Der Aufbau und die Montage solcher Lichtleiteranordnungen ist jedoch in der Regel aufwendig und schwierig.

Der vorliegenden Erfindung liegt deshalb die Aufgabe zugrunde, ein elektrisches/elektronisches Installationsgerät zu schaffen, dessen Lichtleiteranordnung bei Realisierung einer besonders guten Beleuchtungsqualität einen besonders einfachen Aufbau aufweist und welche sich zudem auf besonders einfache Art und Weise herstellen und montieren lässt.

Diese Aufgabe wird durch die im Hauptanspruch angegebenen Merkmale gelöst.

Bei einem solchermaßen ausgebildeten elektrischen/elektronischen Installationsgerät ist besonders vorteilhaft, dass sich solche Lichtleiteranordnungen auf einfache Art und Weise modulartig erweitern lassen, wobei die von den Leuchtmitteln abgegebene Lichtmenge sehr effektiv zum Lichtaustrittsbereich geleitet wird.

Weitere vorteilhafte Ausgestaltungen sind in den Unteransprüchen angegeben. Anhand zweier in den Zeichnungen näher dargestellter Ausführungsbeispiele sei der erfindungsgemäße Gegenstand näher erläutert. Dabei zeigen:
- Fig. 1:: prinziphaft die Lichtleiteranordnung eines solchen elektrischen/elektronischen Installationsgerätes gemäß ersten Ausführungsbeispiel in räumlicher Darstellung im Schnitt;
- Fig. 2:: prinziphaft die Lichtleiteranordnung gemäß Figur 1 räumlich im Detail;
- Fig. 3:: prinziphaft die Lichtleiteranordnung eines solchen elektrischen/elektronischen Installationsgerätes gemäß zweitem Ausführungsbeispiel in räumlicher Darstellung im Schnitt;
- Fig. 4:: prinziphaft die Lichtleiteranordnung gemäß Figur 3 räumlich im Detail;

Wie aus den Zeichnungen hervorgeht, weist ein solches elektrisches/elektronisches Installationsgerät ein Gehäuse auf, dessen Sockelteil 1 zur Aufnahme zumindest einer Funktionseinheit vorgesehen ist. Das Deckelteil 2 des Gehäuses ist zumindest zur Anordnung und Aufnahme mehrerer Betätigungstasten 3 vorgesehen.

Wie des weiteren aus den Figuren hervorgeht, ist im Sockelteil 1 eine Leiterplatte 4 gehalten, auf der unter anderem mehrere als LEDs ausgebildete Leuchtmittel 5 angeordnet sind, und welcher zur Realisierung der zugehörigen Funktionen eine Domschaltmatte 6 zugeordnet ist. Es ist eine Lichtleiteranordnung im Gehäuse gehalten die zumindest aus einem ersten Lichtleitelement 7 und zumindest einem zweiten Lichtleitelement 8 besteht. Das erste Lichtleitelement 7 ist einerseits mit seinem Lichteinkoppelbereich 9 zumindest einem auf der Leiterplatte 4 angeordneten Leuchtmittel 5 und ist andererseits mit seinem Lichtauskoppelbereich 10 dem zugehörigen zweiten Lichtleitelement 8 zugeordnet. Durch die Formgebung und Anordnung seiner Reflektionsflächen wird das vom Leuchtmittel 5 eingespeiste Licht gezielt zum Lichtauskoppelbereich 10 geleitet und somit gezielt in das zweite Lichtleitelement 8 überführt. An das zweite Lichtleitelement 8 ist zumindest ein Lichtaustrittsbereich 15 angeformt, welcher zur bedarfsgerechten Be- und/oder Ausleuchtung an seiner dem Lichtauskoppelbereich gegenüberliegenden Gegenfläche 19 mit einer Strukturierung versehen ist, um eine gezielte Reflektion des Lichts zu erzielen. Zur Vermeidung von Streulicht ist das erste Lichtleitelement 7 mit einem Abschottungsmittel 11 abgedeckt, welches auf der ersten Außenseite 13 des ersten Lichtleitelementes 7 zur Anlage kommt. Vorteilhafterweise ist das Abschottungsmittel 11 einstückig an die Domschaltmatte 6 und/oder an das Deckelteil 2 angeformt. Die Domschaltmatte 6 kann des weiteren Vorteilhafterweise mit einer einstückig angeformten Dichtung 12 versehen sein.

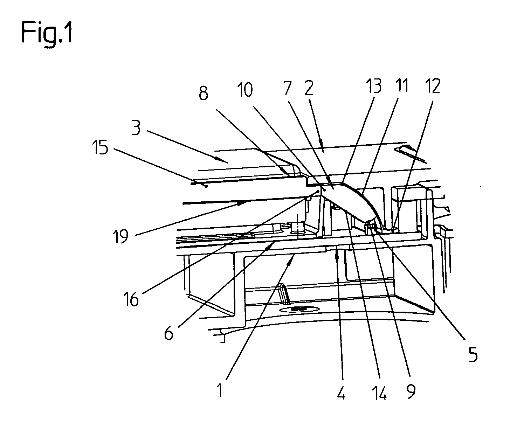

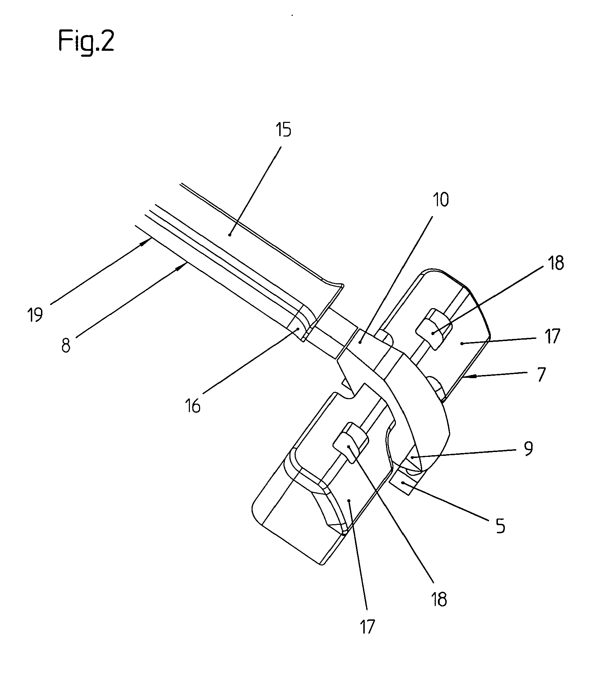

Wie des weiteren insbesondere aus Figur 1 und Figur 2 hervorgeht, weist die zur Reflektion des vom Leuchtmittel 5 eingekoppelten Lichts vorgesehene erste Außenseite 13 des ersten Lichtleitelementes 7 gemäß erstem Ausführungsbeispiel abschnittsweise mehrere Reflektionsbereiche auf, wobei die den Reflektionsbereichen gegenüberliegend angeordnete zweite Außenseite 14 des ersten Lichtleitelementes 7 in Bezug auf die Einkoppelrichtung des vom Leuchtmittel 5 abgegebenen Lichts unter einem Winkel von 45 Grad verläuft, so dass durch diese Anordnung und Ausgestaltung der beiden Außenseiten 13, 14 eine gezielte Mehrfachreflektion innerhalb des ersten Lichtleitelementes 7 stattfindet, und damit dem zweiten Lichtleitelement 8 möglichst verlustfrei, also effektiv die vom Leuchtmittel 5 abgegebene Lichtmenge zugeführt wird. Zu diesem Zweck kommt das zweite Lichtleitelement 8 mit seiner Einkoppelstelle 16 direkt am Lichtauskoppelbereich 10 des ersten Lichtleitelementes 7 zur Anlage. Der Lichtaustrittsbereich 15 des zweiten Lichtleitelementes 8 und dessen Formgebung sind gemäß erstem Ausführungsbeispiel derart ausgestaltet, so dass über den gesamten Lichtaustrittsbereich 15 ein in seiner Intensität gleichmäßiger Lichtaustritt realisiert ist. Im vorliegenden Fall ist der Lichtaustrittsbereich 15 in Form einer Linie ausgeführt und jeweils einem Kantenbereich einer zugehörigen Betätigungstaste 3 zugeordnet.

Wie insbesondere aus Figur 2 hervorgeht, ist dem ersten Lichtleitelement 7 ein einziges als LED ausgebildetes Leuchtmittel 5 zugeordnet. Beiderseits des Lichteinkoppelbereiches 9 sind flügelartige Ansätze 17 angeformt, in welche je ein Befestigungsloch 18 zur positionsgerechten Fixierung eingeformt ist. Zur positionsgerechten Fixierung des ersten Lichtleitelementes 7 greifen an das Deckelteil 2 angeformte Befestigungsnasen haltend in die beiden Befestigungslöcher 18 ein.

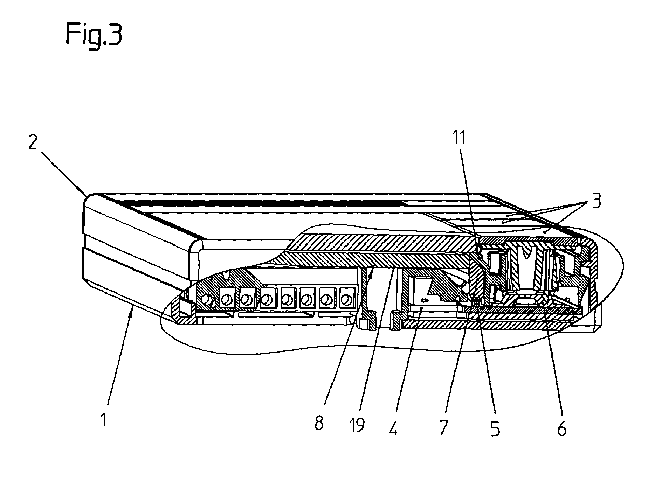

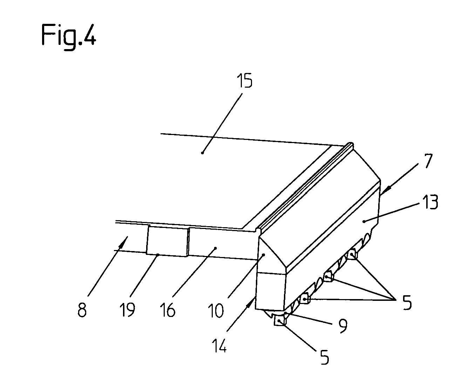

Wie insbesondere aus Figur 3 und Figur 4 hervorgeht, weist die zur Reflektion des von vier Leuchtmitteln 5 eingekoppelten Lichts vorgesehene erste Außenseite 13 des ersten Lichtleitelements 7 einen Reflektionsbereich auf, der in Bezug auf die Einkoppelrichtung des von den vier Leuchtmitteln 5 abgegebenen Lichts unter einem Winkel von 45 Grad verläuft. Die dem Reflektionsbereich gegenüberliegend angeordnete zweite Außenseite 14 des ersten Lichtleitelements 7 verläuft so, dass in Bezug auf die Einkoppelrichtung des von den Leuchtmitteln 5 abgegebenen Lichts, durch die Ausgestaltung der ersten Außenseite 13 bzw. des Reflektionsbereiches eine gezielte Reflektion innerhalb des ersten Lichtleitelements 7 stattfindet und damit dem zweiten Lichtleitelement 8 möglichst verlustfrei, also effektiv die von den vier Leuchtmitteln 5 abgegebene Lichtmenge zugeführt wird. zu diesem Zweck, kommt das zweite Lichtleitelement 8 mit seiner Einkoppelstelle 16 direkt am Lichtauskoppelbereich 10 des ersten Lichtleitelementes 7 zu Anlage. Der Lichtaustrittsbereich 15 bzw. die dem Lichtaustrittsbereich 15 gegenüberliegend angeordnete Gegenfläche 19 des zweiten Lichtleitelements 8 sind gemäß zweitem Ausführungsbeispiel derart ausgestaltet, so dass über den gesamten flächig ausgeführten Lichtaustrittsbereich 15 ein in seiner Intensität gleichmäßiger Lichtaustritt realisiert ist. Im vorliegenden Fall ist der Lichtaustrittsbereich 15 in Form einer rechteckigen Fläche ausgeführt und dem Bereich des elektrischen/elektronischen Installationsgerätes zugeordnet, welcher z. B. zur Aufnahme der Namensschilder der Wohnungsinhaber vorgesehen ist.

## Patentansprüche

1. Elektrisches/elektronisches Installationsgerät mit einem Gehäuse zur Aufnahme mehrerer Funktionseinheiten, wobei das Gehäuse ein zur Aufnahme zumindest einer Funktionseinheit vorgesehenes Sockelteil und zumindest ein zur Halterung von Betätigungstasten vorgesehenes Deckelteil aufweist und wobei im Gehäuse zur Beleuchtung mehrerer Beleuchtungsbereiche zumindest eine einem Leuchtmittel zugeordnete Lichtleiteranordnung vorhanden ist, **dadurch gekennzeichnet, dass** die Lichtleiteranordnung aus zumindest einem ersten Lichtleitelement (7) besteht, welches mit seinem Lichteinkoppelbereich (9) zumindest einem auf einer Leiterplatte (4) angeordneten Leuchtmittel (5) zugeordnet ist, und welches durch die Formgebung und Anordnung seiner Reflektionsbereiche und seines Lichtauskoppelbereiches (10) das eingespeiste Licht durch Reflektion gezielt in zumindest ein zweites Lichtleitelement (8) einspeist, welches zum Zwecke der Beleuchtung zumindest einen Lichtaustrittsbereich (15) aufweist.

2. Elektrisches/elektronisches Installationsgerät nach Anspruch 1, **dadurch gekennzeichnet, dass** zumindest zwei aus mehreren Lichtleitelementen (7, 8) bestehende Lichtleiteranordnungen vorgesehen sind.

3. Elektrisches/elektronisches Installationsgerät nach Anspruch 1 oder 2, **dadurch gekennzeichnet, dass** zumindest ein Leuchtmittel (5) als LED ausgeführt ist.

4. Elektrisches/elektronisches Installationsgerät nach einem der Ansprüche 1 bis 3, **dadurch gekennzeichnet, dass** zumindest ein erstes Lichtleitelement (7) und/oder zumindest ein zweites Lichtleitelement (8) zur Vermeidung von Streulicht mit einem Abschottungsmittel (11) abgedeckt ist.

5. Elektrisches/elektronisches Installationsgerät nach einem der Ansprüche 1 bis 4, **dadurch gekennzeichnet, dass** zumindest ein Lichtaustrittsbereich (15) des zweiten Lichtleitelementes (8) punktförmig ausgeführt ist.

6. Elektrisches/elektronisches Installationsgerät nach einem der Ansprüche 1 bis 5, **dadurch gekennzeichnet, dass** zumindest ein Lichtaustrittsbereich (15) des zweiten Lichtleitelementes (8) linienförmig ausgeführt ist.

7. Elektrisches/elektronisches Installationsgerät nach einem der Ansprüche 1 bis 6, **dadurch gekennzeichnet, dass** zumindest ein Lichtaustrittsbereich (15) des zweiten Lichtleitelementes (8) als Fläche ausgeführt ist.

8. Elektrisches/elektronisches Installationsgerät nach einem der Ansprüche 1 bis 7, **dadurch gekennzeichnet, dass** die zur Reflektion des vom Leuchtmittel (5) eingekoppelten Lichts vorgesehene erste Außenseite (13) des ersten Lichtleitelementes (7) zumindest einen Reflektionsbereich aufweist.

9. Elektrisches/elektronisches Installationsgerät nach einem der Ansprüche 1 bis 8, **dadurch gekennzeichnet, dass** die zur Reflektion des vom Leuchtmittel (5) eingekoppelten Lichts vorgesehene erste Außenseite (13) des ersten Lichtleitelementes (7) mehrere abschnittsweise angeordnete Reflektionsbereiche aufweist, und dass die den Reflektionsbereichen der ersten Außenseite (13) gegenüberliegend angeordneten zweite Außenseite (14) des ersten Lichtleitelementes (7) in Bezug auf die Einkoppelrichtung des vom Leuchtmittel (5) angegebenen Lichts unter einem Winkel von ca. 45 Grad verläuft, so dass durch gezielte Mehrfachreflektion innerhalb des ersten Lichtleitelementes (7) das Licht zum zweiten Lichtleitelement (8) geführt wird.

10. Elektrisches/elektronisches Installationsgerät nach einem der Ansprüche 1 bis 9, **dadurch gekennzeichnet, dass** zumindest ein Reflektionsbereich in Bezug auf die Einkoppelrichtung des vom Leuchtmittel (5) abgegebenen Lichts unter einem Winkel von 45 Grad verläuft.

11. Elektrisches/elektronisches Installationsgerät nach einem der Ansprüche 1 bis 10, **dadurch gekennzeichnet, dass** das erste Lichtleitelement (7) und/oder das zweite Lichtleitelement (8) zum Zwecke der Lichtabschottung von einem Abschottungsmittel (11) abgedeckt ist, das einstückig an eine Domschaltmatte (6) angeformt ist, welche innerhalb des Gehäuses angeordnet ist.

12. Elektrisches/elektronisches Installationsgerät nach einem der Ansprüche 1 bis 11, **dadurch gekennzeichnet, dass** das mit dem Lichtaustrittsbereich (15) versehene zweite Lichtleitelement (8) an seiner dem Lichtaustrittsbereich (15) gegenüberliegenden Gegenfläche (19) mit zumindest einem Reflektionsbereich versehen ist.

13. Elektrisches/elektronisches Installationsgerät nach Anspruch 12, **dadurch gekennzeichnet, dass** zumindest ein Reflektionsbereich durch einen auf die Gegenfläche (19) aufgebrachten Farbauftrag realisiert ist.

14. Elektrisches/elektronisches Installationsgerät nach Anspruch 12, **dadurch gekennzeichnet, dass** zumindest ein Reflektionsbereich durch eine auf die Gegenfläche (19) aufgebrachte Spiegelfläche realisiert ist.

15. Elektrisches/elektronisches Installationsgerät nach Anspruch 12, **dadurch gekennzeichnet, dass** zumindest ein Reflektionsbereich durch eine in die Gegenfläche (19) eingebrachte Strukturierung realisiert ist.
